# EUROPEAN PATENT SPECIFICATION

(11) **EP 2 852 776 B1**
(45) Date of publication and mention of the grant of the patent: **04.05.2016**
(21) Application number: 13732631.0
(22) Date of filing: 17.05.2013
(51) Int. Cl.: F16F 7/06

(54) **RADIAL FREE-TRAVEL VIBRATION DAMPER, AND HOUSEHOLD APPLIANCE WITH A DAMPENING SYSTEM COMPRISING SAID RADIAL DAMPER**
RADIALER SCHWINGUNGSDÄMPFER MIT FREIEM SPIEL UND HAUSHALTSVORRICHTUNG MIT EINEM DÄMPFUNGSSYSTEM MIT DIESEM RADIALEN DÄMPFER
AMORTISSEUR RADIAL DE VIBRATIONS À COURSE LIBRE, ET APPAREIL MÉNAGER AYANT UN SYSTÈME D'AMORTISSEMENT COMPORTANT LEDIT AMORTISSEUR RADIAL

(30) Priority: 23.05.2012 ES 201230775
(43) Date of publication of application: 01.04.2015
(73) Proprietor: BSH Hausgeräte GmbH, 81739 München (DE)
(72) Inventor: GRACIA BOBED, Ismael, E-50194 Zaragoza (ES); LATRE ABADIA, Roberto, E-50014 Zaragoza (ES); MARTINEZ PEREZ, Gerardo, E-50015 Zaragoza (ES); RECIO FERRER, Eduardo, E-50013 Zaragoza (ES)
(86) International application number: PCT/IB2013/054030
(87) International publication number: WO 2013/175363

(56) References cited:
- WO-A1-2011/070092
- JP-U- H 044 897
- US-A- 1 015 015
- US-A- 1 717 112

## Description

The present invention relates to the technical field of vibration dampening devices, particularly radial dampers, and has particular utility in household electrical appliances such as washing machines and dryers.

Radial free stroke dampers are known as disclosed JP H04 4894 U.

Washing machines and dryers with a wash drum housed rotatably in a wash tub usually have a vibration dampening device that joins the wash tub or the wash tank to the housing. The vibrations and noise produced by the rotational movement of the drum are dampened by means of a vibration dampening device.

Vibrations are transmitted through dampening elements to avoid having the movements of the oscillating unit (assembly: wash tub, drum, and motor) directly transmitted to the frame of washing machines to produce vibrations and noise therein. Linear damper systems for absorbing these vibrations are known that include piston type dampers such as, for example, the free-travel damper described in application EP 1754908 A2, which has a short path (from 5 mm to 8 mm) with little or no frictional force. These dampers essentially function during the periods when the machine motor is accelerating or decelerating the rotational speed of the drum, that is, when oscillating movements are longer due to greater inertia and exceed the amplitude of the frictionless free travel path of the damper, which then exerts a braking action. When the load in the washer drum stabilizes as higher rotational speeds are reached, the oscillating movements are of lower amplitude and piston movement is reduced so as to move within the range of free travel without exerting frictional force. In this way, it is possible to reduce or eliminate the force transmitted to the frame, the vibrations and hence the noise, since frictional force is not exerted due the tub hardly moving at all, and the slight movement produced is not limited by the damper so that forces are not transmitted to the frame. However, these linear free-travel vibration dampers are relatively large, especially in length.

Also known are radial dampers for which the design is different from that of linear dampers. In radial dampers, for example, such as those described in prior art document WO 2011/070092 A1, the necessary frictional force is achieved radially with friction applied by rotation of a shaft driven by a rigid arm attached to the tub. It is an example of a connecting rod-crankshaft unit, and friction is applied to the shaft radially so that the crossbar supporting the mounts is not directly affected and bending is not transmitted. Nevertheless, known radial damper systems do not have free travel, and thus have the disadvantage of being engaged continuously, and of transmitting vibrations at all times, which can cause the vibration damper to wear out prematurely.

The present invention has the object of overcoming the disadvantages of the state of the art described above by means of a radial free-travel vibration damper, and a household appliance with a dampening system comprising the radial damper.

The radial vibration damper according to the invention comprises, connectable to a first element, a cylindrical outer bushing having an inner wall able to house an inner shaft that is connectable to a second element, so that the inner shaft and the cylindrical outer bushing are capable of angular movement relative to one another, and a friction means to radially grasp the inner shaft exerting a frictional force to dampen rotational movement, wherein the damper comprises an inner bushing rotatably housed within an outer bushing, with the inner bushing comprising an outer wall facing the inner wall of the outer bushing and an inner axial passage within which the inner shaft is located; and a rotation-delimiting system between the inner bushing and the outer bushing that permits rotation between the outer bushing and the inner bushing over a determined free-travel angle of rotation within which the friction means does not engage, and which rotationally locks the inner bushing and the outer bushing together by engaging the friction means.

The inner bushing either can be joined solidly to the inner shaft in which case the friction means is located within the rotatable connection between the inner shaft and the second element, or else the inner bushing can be rotatable with respect to the inner shaft with the friction element placed between the two with the inner shaft not rotatable with respect to the second element.

In a more detailed embodiment, the radial vibration damper comprises a cylindrical outer bushing with an inner wall, connectable to a first element and able to house an inner shaft connectable to a second element, in such a way that the inner shaft and the cylindrical outer bushing are capable of angular movement relative to one another, and the internal friction means for radially grasping the inner shaft exerts a frictional force for dampen rotational movement, with the radial damper being characterized in
comprising an inner bushing rotatably housed within the outer bushing, the inner bushing comprising an outer wall facing the inner wall of the outer bushing and an inner axial passage within which the friction means is arranged radially, exerting a frictional force at least on the inner bushing;
rotation between the inner bushing and the outer bushing being limited by a rotation-delimiting system (comprising at least one axial channel located between the inner bushing and the outer bushing, and at least one rotation-delimiting element) located in the axial channel;
the axial channel having a cross section in the shape of a circular ring segment delimited by two radial end stop surfaces;
each rotation-delimiting element being selected from among, protrusions arising from the inner wall of the outer bushing, projections arising from the outer wall of the inner bushing, and sliding blocks; and
each protruding element being moveable in the corresponding channel such that for the inner bushing and the external bushing to rotate with respect to one another each protruding element has a free path in the axial channel limited by said stop surfaces, which can correspond to a 1 to 4° arch.

The radial damper can comprise at least one rotation-delimiting element designed to move in the channel opposing a friction force when the external bushing and the inner bushing rotate with respect to one another so as to dampen the rotation between the inner bushing and the external bushing.

The internal friction means can comprise at least one tubular element interposed between the inner shaft and the inner bushing, or a plurality of internal friction means spaced away from one another by respective axial gaps; and the inner passage of the inner bushing comprises at least one axial internal projection fitting into one of the axial gaps. In this latter case, the internal friction means can have a cross-section in the shape of a circular ring segment, and can be pads of an elastic material inserted under pressure between the inner shaft and the inner bushing. The inner shaft can comprise at least one outer axial rib inserted into one of the axial gaps.

According to a preferred embodiment of the invention, the radial damper comprises at least one axial channel formed by an internal recess in the inner wall of the outer bushing, while the rotation-delimiting element located in the internal recess is an external protrusion that arises from the outer wall of the inner bushing. Alternatively, the radial damper comprises at least one axial channel that is formed by an external recess in the outer wall of the inner bushing. According to this embodiment, the rotation-delimiting element located in said external recess is an internal protrusion that arises from the inner wall of the outer bushing. According to this embodiment, the stop surfaces of said axial channel are formed by respective radial steps that delimit the axial channel formed by the internal recess of the outer bushing.

According to another preferred embodiment, the radial damper comprises at least one axial channel that is formed by an internal recess in the inner wall of the outer bushing or by an external recess in the outer wall of the inner bushing; and at least one of the rotation-delimiting elements is a sliding block arranged in the axial channel that is moveable along the length of same free path between the stop surfaces.

According to a further preferred embodiment of the invention, the radial damper can comprise a plurality of sliding blocks each of which is arranged in an axial channel.

In this case, the outer wall of the inner bushing can be provided with a plurality of external projections, while the external projections comprise respective radially opposed axial sides, which form the respective stop surfaces delimiting the free paths of the respective sliding blocks. Alternatively, the inner wall of the outer bushing can be provided with a plurality of internal projections, in which case the internal projections comprise respective radially opposed axial sides, which form the respective stop surfaces delimiting the free paths of the respective sliding blocks.

According to yet another preferred embodiment of the invention, when the radial damper comprises a plurality of sliding blocks each arranged in an axial channel, the outer wall of the inner bushing can be provided with at least one external protrusion that comprises respective radially opposed axial sides, in which case the inner wall of the outer bushing can be provided with at least one internal protrusion that comprises respective radially opposed axial sides, such that at least one of the axial channels will be delimited between an internal protrusion and an external protrusion and the opposed axial sides of the projections form the respective stop surfaces that limit the free travel of the sliding block located in said axial channel.

According to yet a further preferred embodiment of the invention, the radial damper comprises a plurality of sliding blocks each of which is arranged in an axial channel. According to this preferred embodiment, the outer wall of the inner bushing is provided with a plurality of external projections that comprise respective radially opposed axial sides that form the respective stop surfaces that delimit the free travel of the respective sliding blocks, while the inner wall of the outer bushing is provided with a plurality of internal projections that comprise respective radially opposed axial sides that form the respective stop surfaces that delimit the free travel of the respective sliding blocks. In this way, each axial channel is delimited between an internal protrusion and an external protrusion.

According to still another preferred embodiment of the invention, at least one of and preferably all of the sliding blocks can comprise a pad of an elastic material inserted under pressure into one of the axial channels. Moreover, at least one and preferably all of the rotation-delimiting elements can have a cross-section in the shape of a circular ring segment.

The household appliance, especially a washing machine or dryer according to the invention comprises a housing that houses a wash tub in which a wash drum rotates being driven by a motor, the tub being connected with the housing through at least one support element from a dampening system. The support element articulated to the housing with interposition of a swiveling lever and at least one articulation that comprises a radial vibration damper, at least one articulation comprising the radial damper described earlier.

As can be observed, a radial damper according to the present invention can achieve, in a certain type of oscillation, the shortest and most frequent, that is produced in a stabilized machine at a constant speed, a reduction in friction so that no vibrations are transmitted to the frame in phase with the greater number of revolutions and oscillations. In addition, these radial dampers offer the advantages of: reducing the stresses transmitted to the base of the frame, greater ease of assembly such that in fact the installation onto the frame can be accomplished on an assembly line with the connection to the tub becoming easier, requiring less space for assembly, and packaging as a standard part.

According to what is apparent from the foregoing, the present invention achieves its object by means of a radial vibration damper of simple and robust construction, easy and economical in its manufacture, and additionally simple to install in household appliances such as washers and dryers, offering an efficient vibration dampening effect.

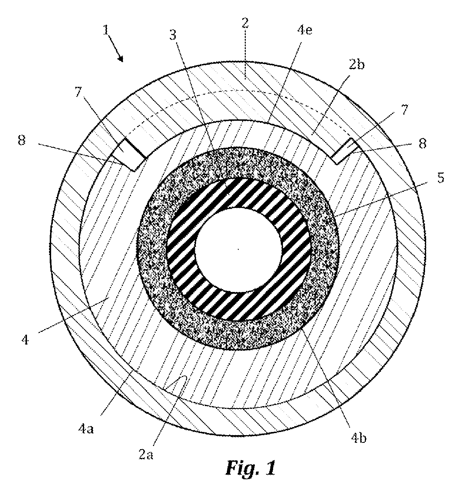

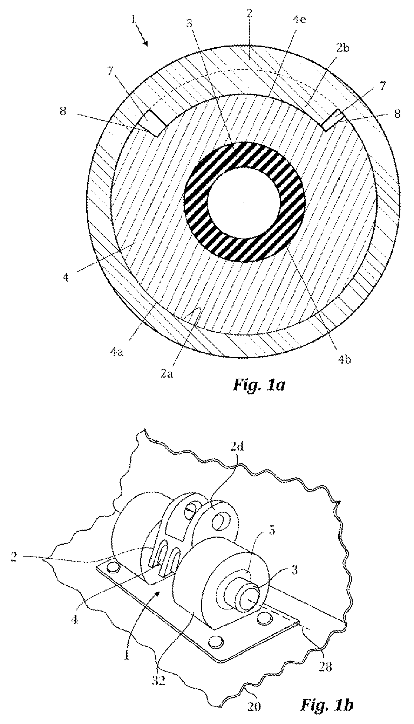

Aspects and embodiments of the invention are described below with reference to the accompanying drawing, based in several figures, wherein
Figure 1 is a cross-sectional view of a first embodiment of a radial vibration damper;
Figure 1 a is a cross-sectional view of a fifth embodiment of a radial vibration damper;
Figure 1b is an anterior perspective view of a radial vibration damper;
Figure 2 is a cross-sectional view of a second embodiment of a radial vibration damper;
Figure 3 is a cross-sectional view of a third embodiment of a radial vibration damper;
Figure 4 is an anterior perspective view of a radial vibration damper;
Figure 5 is a cross-sectional view of the radial damper along line A-A shown in Figure 4;
Figure 6 is an exploded view of the radial damper shown in Figures 4 and 5;
Figure 7 is a frontal perspective view of a washing machine suitable for incorporation of a dampening system with at least one radial damper;
Figure 8 is a sectional view along line B-B shown in Figure 7.

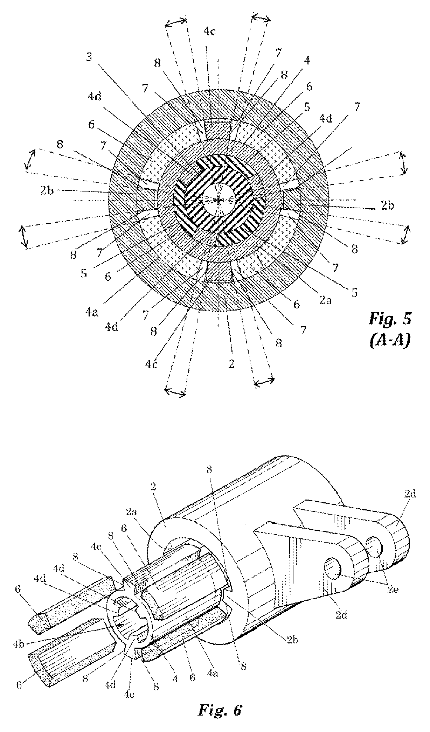

In the embodiments illustrated in Figures 1 through 6, the subject radial vibration damper 1 comprises cylindrical outer bushing 2 with inner wall 2a, connectable to a first element and capable of housing inner shaft 3 connectable to a second element, in such a way that inner shaft 3 and cylindrical outer bushing 2 can move rotatably with respect to one another, and internal friction means 5 to radially enclose inner shaft 3 exerting a friction force for dampening the rotational movement. Rotatable inner bushing 4 is housed in outer bushing 2. Inner bushing 4 exhibits outer wall 4a opposite to inner wall 2a of outer bushing 2 and inner axial passage 4b wherein friction means 5 are radially arranged to exert frictional force at least against inner bushing 4.

The rotation between inner bushing 4 and outer bushing 2 is limited by rotation-delimiting system 2b, 4c, 7, 8 that comprises at least one axial channel 7 located between inner bushing 4 and outer bushing 2, and at least one rotation-delimiting element 2b, 4c, 6 located in axial channel 7. Axial channel 7 has a cross section in the shape of a circular ring segment delimited between two radial end stop surfaces 8. Each rotation-delimiting element 2b, 4c, 6 is selected among protrusions 2b arising from inner wall 2a of outer bushing 2, projections 4c arising from outer wall 4a of inner bushing 2 and sliding blocks 6. Each protruding element 2b is moveable in corresponding channel 7 such that for outer bushing 2 and inner bushing 4 to rotate with respect to one another each protruding element 2b, 4c has a free path in axial channel 7 limited by stop surfaces 8, which can correspond to a 1 to 4° arch.

In the first embodiment shown in Figure 1, radial damper 1 comprises axial channel 7 formed by external recess 4e in outer wall 4a of inner bushing 4. According to this embodiment, the rotation-delimiting element located in said external recess 4e is internal protrusion 2b with a cross-section in the shape of a circular ring segment that arises from inner wall 2a of the outer bushing. Stop surfaces 8 of said axial channel 7 are formed by respective radial steps that delimit axial channel 7 formed by the internal recess of outer bushing 2. The internal friction means are constituted by tubular element 5 that encircles inner shaft 3 and that is formed to be interposed between inner shaft 3 and inner bushing 4.

In this first embodiment, the oscillations produced by low-intensity vibrations cause internal protrusion 2b to be freely moved back and forth between stop surfaces 8 in axial channel 7. In turn, the oscillations produced by vibrations of an intensity higher than a certain threshold value cause external protrusion 2b to stop at respective stop surfaces 8 and push them to a varying extent, causing rotation of inner bushing 4 in one direction or the other. These rotation movements will be dampened by the resistance to rotation afforded by the friction element in the form of tubular element 5, both with respect to the surface of inner axial passage 4b of bushing 4 as well as with respect to the peripheral surface of inner shaft 3.

In Figure 1a is shown a sectional view of another embodiment of the radial damper wherein inner wall 4b of bushing 4 is joined without rotation to inner shaft 3 such that when outer bushing 2 rotates and the rotation-delimiting system blocks the relative rotation between the two bushings 2 and 4, the outer bushing that carries the inner shaft as shown in Figure 1 b will rotate around lug 32 of the second element for fastening to the housing of the appliance (or of the tub) engaging friction elements 5.

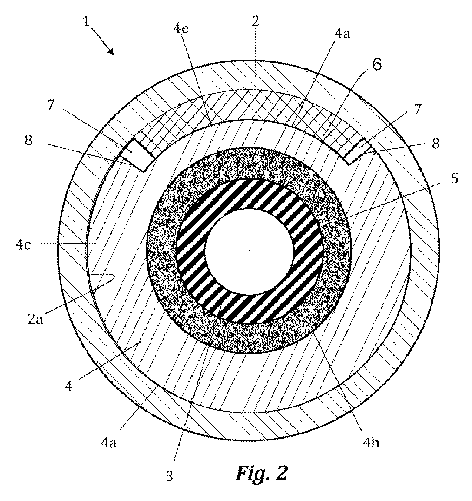

In the second embodiment shown in Figure 2, radial damper 1 also comprises external recess 4e in outer wall 4a of inner bushing 4. According to this second embodiment, the rotation-delimiting element is sliding block 6 arranged in axial channel 7 in a moveable manner along said free path between stop surfaces 8. Sliding block 6 is a pad of an elastic material with a cross-section in the shape of a circular ring segment inserted under pressure into axial channel 7. In this second embodiment, the oscillations produced by low-intensity vibrations cause sliding block 6 to be moved back and forth between stop surfaces 8 in axial channel 7 against the frictional force exerted by friction block 6 in inner wall 2a of the outer bushing and outer wall 4a of inner bushing 4, such that the rotation between outer bushing 2 and inner bushing 4 will be dampened. Oscillations produced by vibrations of an intensity higher than a certain threshold value cause sliding block 6 to stop at respective stop surfaces 8 and push them to a varying extent, causing rotation of inner bushing 4 in one direction or the other. These rotation movements will be dampened by the resistance to rotation afforded by the friction element in the form of tubular element 5, both with respect to the surface of inner axial passage 4b of bushing 4 as well as with respect to the peripheral surface of inner shaft 3.

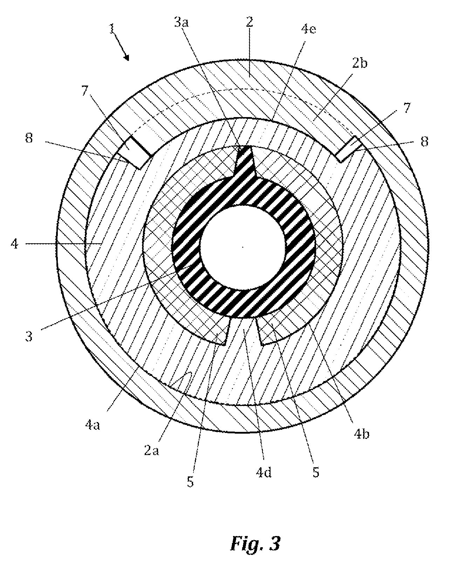

The third embodiment illustrated in Figure 3 differs from the first embodiment only in that in the case of Figure 3, the internal friction means comprise two symmetrical pads 5 with a cross-section in the shape of a circular ring segment, which are spaced apart by respective axial gaps into which respectively fit axial rib 3a that arises from the periphery of inner shaft 3 and internal projection 4d that arises to the inside of inner passage 4b of the inner bushing, such that the inner shaft 3 cannot rotate about inner bushing 4. Also in this third embodiment, the oscillations produced by low-intensity vibrations cause internal protrusion 2b to be moved freely back and forth between stop surfaces 8 in axial channel 7, while the oscillations produced by vibrations of an intensity higher than a certain threshold value cause external protrusion 2b to stop at respective stop surfaces 8 and push them to a varying extent, causing rotation of inner bushing 4 in one direction or the other. These rotation movements will be dampened by the resistance to rotation afforded by the friction element in the form of tubular element 5 only with respect to the surface of inner axial passage 4b of bushing 4.

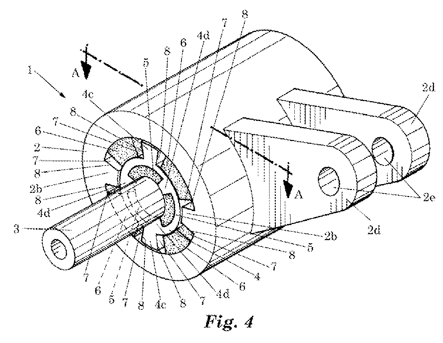

Radial damper 1 of the fourth embodiment shown in Figures 4 through 6 comprises a plurality of sliding blocks 6 with a cross-section in the shape of a circular ring segment, each one inserted under pressure into an axial channel 7. Outer wall 4a of inner bushing 4 is provided with a plurality of external projections 4c that comprise respective radially opposed axial sides that form respective stop surfaces 8 delimiting the free paths of respective sliding blocks 6 on the one hand, while inner wall 2a of outer bushing 2 is provided with a plurality of internal projections 2b that comprise respective radially opposed axial sides that form the respective stop surfaces 8 delimiting the free travel of respective sliding blocks on the other hand, such that each axial channel 7 is delimited between internal protrusion 2b and external protrusion 4b. Projections 2b, 4c have a cross-section in the shape of a circular ring segment. From outer bushing 2 arise two coupling lugs 2d provided from respective through holes 2e that permit coupling of radial damper 1 to the household appliance. In this fourth embodiment, the internal friction means comprise a plurality of internal friction elements 5 spaced apart from one another by respective axial gaps into which respectively fit internal projections 4d. Internal friction means 5 have a cross-section in the shape of a circular ring segment, while internal friction means 5 can be pads of an elastic material inserted under pressure between inner shaft 3 and inner bushing 4.

The operation of radial damper 1 shown in Figure 1 is analogous to that of the radial damper of the second embodiment described earlier with reference to Figure 2. Thus, oscillations produced by vibrations of an intensity higher than a certain threshold value cause sliding blocks 6 to stop at respective stop surfaces 8 and push them to varying extents, causing rotation of inner bushing 4 in one direction or the other. These rotational movements will be dampened by the resistance to rotation afforded by internal friction elements 5 with respect to the surface of inner axial passage 4b of bushing 4 as well as with respect to the peripheral surface of inner shaft 3.

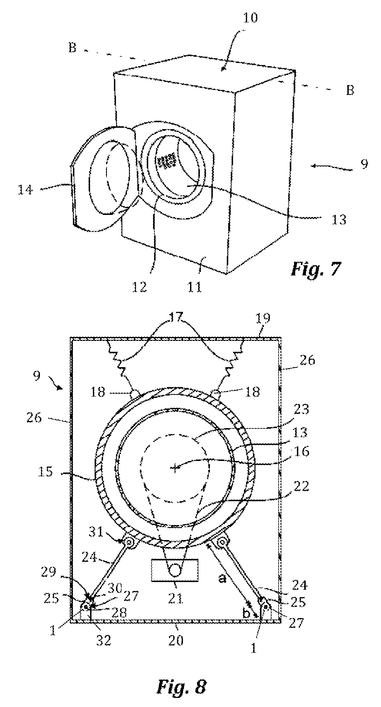

In Figures 7 and 8 can be seen an example of a household appliance, namely washing machine 9 that incorporates radial dampers 1 according to the invention. As can be seen, washing machine 9 comprises housing 10 that comprises front loading wall 11, upper base 19, lower base 20, and respective side walls 26. Front loading wall 11 comprises loading opening 12 through which is accessed wash drum 13, and loading door 14 to close loading opening 12.

In housing 9 is housed wash tub 15 in which wash drum 13 rotates being driven by motor 21 connected by fan belt 22 to driven pulley 23 coupled to wash drum 15.

The upper portion of tub 15 is connected to upper base 19 of housing 20 by means of springs 17, the respective lower ends of which are coupled to respective hooks 18 provided in tub 15 and the upper ends of which are coupled to upper base 19 of housing 9.

The lower portion of tub 15 is connected with lower base 20 of housing 10 through support elements 24 of a dampening system. Each support element 24 is articulated to housing 10 with interposition of swiveling lever 25, for example, constituted of coupling lugs 2d described earlier with reference to radial damper 1 of Figure 4, and articulations 27, 29, 31 that comprise radial damper 1 as described earlier.

In particular, radial damper 1 is connected to first pivoting shaft 28, for example, as in axial shaft 3 described with reference to radial damper 1 according to the embodiments shown in Figures 1 through 6, which pivots on fastening lugs 32 mounted on base 20 of housing 10 so as to form first swivel joint 27. Swiveling lever 25 is articulated to one of the ends of support element 24 by means of second pivoting shaft 29 such that swiveling lever 25 and support element 24 are connected through second swivel joint 29. In turn, support element 24 is articulated through its other end to wash tub 15 by means of third swivel joint 31.

### List of Reference Symbols

- 1: Radial damper
- 2: Outer bushing
- 2a: Inner wall of the outer bushing
- 2b: Internal protrusion from the outer bushing
- 2c: Internal recess
- 2d: Coupling lug
- 2e: Through hole
- 3: Inner shaft
- 3a: Axial rib
- 4: Inner bushing
- 4a: Outer wall of the inner bushing
- 4b: Axial inner passage of the inner bushing
- 4c: External projection from the inner bushing
- 4d: Internal projection from the inner bushing
- 4e: External recess
- 5: Internal friction element
- 6: Sliding block element
- 7: Axial channel
- 8: Stop surface
- 9: Washing machine
- 10: Housing
- 11: Front wall of the housing
- 12: Loading opening
- 13: Wash drum
- 14: Loading door
- 15: Wash tub
- 16: Drum rotation shaft
- 17: Springs
- 18: Hooks from the springs to the tub
- 19: Cover wall
- 20: Housing base
- 21: Drive motor
- 22: Fan belt
- 23: Driven pulley
- 24: Support elements
- 25: Swiveling lever
- 26: Side walls of the housing
- 27: First swivel joint
- 28: First pivoting shaft
- 29: Second swivel joint
- 30: Second pivoting shaft
- 31: Third swivel joint
- 32: Fastening lugs

## Claims

1. Radial vibration damper comprising a cylindrical external bushing (2) which comprises an internal wall (2a), connectable to a first element and capable of housing an inner shaft (3) connectable to a second element, in such a way that the inner shaft (3) and the cylindrical external bushing (2) have rotatory movement capacity one respect to the other, friction means (5) to radially enclose the inner shaft (3) exerting a friction force for dampening the rotatory movement, and an internal bushing (4) housed in the external bushing (2) with a rotation capacity, the internal bushing (4) comprising an external wall (4a) opposite to the internal wall (2a) of the external bushing (2) and an internal axial passage (4b) in which the inner shaft (3) is arranged; **characterized in that** it comprises:
a rotation-delimiting system (2b, 4c, 7, 8) between the internal bushing (4) and the external bushing (2) such that it allows the rotation between the external bushing (2) and the internal bushing (4) in a determined free path, therefore the friction means (5) do not act and it blocks rotation between the external bushing (2) and the internal bushing (4) by actuating the friction means and **in that** the friction means (5) are radially grasping the inner shaft (3) exerting a frictional force to damp rotational movement.

2. Radial vibration damper according to claim 1, **characterized in that**:
- the internal friction means (5) are arranged radially in the internal axial passage (4b) exerting a friction force at least on the internal bushing (4);
- the rotation-delimiting system (2b, 4c, 7, 8) comprises at least an axial channel (7) located between the internal bushing (4) and the external bushing (2), and at least a rotation-delimiting element (2b, 4c, 6) located in the axial channel (7);
- the axial channel (7) has a cross section in the shape of a circular ring segment delimited between two radial end stop surfaces (8);
- each rotation-delimiting element (2b, 4c, 6) being selected among projections (2b) emerging from the internal wall (2a) of the external bushing (2), protrusions (4c) emerging from the external wall (4a) of the internal bushing (2) and sliding blocks (6); and
- each projecting element (2b, 4c) is displaceable within the corresponding channel (7) in such a manner that, when the external bushing (2) and the internal bushing (4) rotate one respect to the other, each projecting element (2b, 4c) has a free path in the axial channel (7) limited by said stop surfaces (8).

3. Radial damper according to claim 2, **characterized in that** at least one rotation-delimiting element (2b, 4c, 6) is designed to be displaced in the channel (7) opposing a friction force when the external bushing (2) and the internal bushing (4) rotate one respect to the other so as to dampen the rotation between the internal bushing (4) and the external bushing (2).

4. Radial damper according to claim 2 or 3, **characterized in that**
- at least one axial channel (7) is formed by an internal recess on the internal wall (2a) of the external bushing (2);
- the rotation-delimiting element placed in the internal recess is an external protrusion (4c) emerging from the external wall (4a) of the internal bushing (4); and
- the stop surfaces (8) of said axial channel (7) are formed by respective radial steps that delimit the axial channel (7) formed by the internal recess of the external bushing (2).

5. Radial damper according to claim 2 or 3, **characterized in that**
- at least one axial channel (7) is formed by an external recess (4e) on the external wall (4a) of the internal bushing (4);
- the rotation-delimiting element placed in said external recess (4e) is an internal projection (2b) emerging from the internal wall (2a) of the external bushing (2); and
- the stop surfaces (8) of said axial channel (7) are formed by respective radial steps that delimit the axial channel (7) formed by the internal recess (4e) of the internal bushing (4).

6. Radial damper according to claim 2 or 3, **characterized in that**
- at least one axial channel (7) is formed by an internal recess on the internal wall (2a) of the external bushing (2), or by an external recess (4e) on the external wall (4a) of the internal bushing (4); and
- at least one of the rotation-delimiting elements is a sliding block (6) arranged in the axial channel (7) in a displaceable manner along said free path between the stop surfaces (8).

7. Radial damper according to claim 6, **characterized in that**
- it comprises a plurality of sliding blocks (6), each being arranged in an axial channel (7);
- the external wall (4a) of the internal bushing (4) is provided with a plurality of external protrusions (4c); and
- the external protrusions (4c) comprise corresponding radially opposed axial sides, which form respective stop surfaces (8) delimiting the free paths of the respective sliding blocks (6).

8. Radial damper according to claim 6, **characterized in that**
- it comprises a plurality of sliding blocks (6), each being arranged in an axial channel (7);
- the internal wall (2a) of the external bushing (2) is provided with a plurality of internal projections (2b); and
- the internal projections (2b) comprise corresponding radially opposed axial sides, which form respective stop surfaces (8) delimiting the free paths of the respective sliding blocks (6).

9. Radial damper according to any of claims 6, **characterized in that**
- it comprises a plurality of sliding blocks (6), each being arranged in an axial channel (7);
- the external wall (4a) of the internal bushing (4) is provided with at least an external protrusion (4c) comprising respective radially opposed axial sides;
- the internal wall (2a) of the external bushing (2) is provided with at least an internal projection (2b) comprising respective radially opposed axial sides;
- at least one of the axial channels (7) is delimited between an inter-nal projection (2b) and an external protrusion (4c); and
- the opposed axial sides of the projections (2b, 4c) form the respective stop surfaces (8) limiting the free path of the sliding block (6) placed in said axial channel (8).

10. Radial damper according to claim 6, **characterized in that**
- the external wall (4a) of the internal bushing (4) is provided with a plurality of external protrusions (4c);
- the external protrusions (4c) comprise respective radially opposed axial sides, which form the respective stop surfaces (8) delimiting the free paths of the respective sliding blocks (6);
- the internal wall (2a) of the external bushing (2) is provided with a plurality of internal projections (2b);
- the internal projections (2b) comprise respective radially opposed axial sides, which form the respective stop surfaces (8) delimiting the free paths of the respective sliding blocks (6); and
- each axial channel (7) is delimited between an internal projection (2b) and an external protrusion (4c).

11. Radial damper according to any of claims 2 to 10, **characterized in that** at least one of the sliding blocks (6) is comprised by a pad of an elastic material inserted under pressure in one of the axial channels (7).

12. Radial damper according to any of the preceding claims, **characterized in that** at least one of the rotation-delimiting elements (6) has a cross section in the shape of a circular ring segment.

13. Radial damper according to any of the preceding claims, **characterized in that** the free path of each rotation-delimiting element (2b, 4c, 6) corresponds to a 1 to 4° arch.

14. Radial damper according to any of the claims 2 to 13, **characterized in that** the internal friction means (5) comprise at least a tubular element interposed between the inner shaft (3) and the internal bushing (4).

15. Radial damper according to any of the preceding claims, **characterized in that** the internal friction means (5) are arranged interposed between the inner shaft (3) and the second element (4).

16. Radial damper according to any of claims 2 to 13, **characterized in that** the internal friction means (5) comprise a plurality of internal friction elements (5) spaced away one from the other by respective axial gaps; and the internal passage (4b) of the internal bushing (4) comprises at least an axial internal projection (4d) fitting into one the axial gaps.

17. Radial damper according to claim 16, **characterized in that** the internal friction means (5) have a cross section in the shape of a circular ring segment.

18. Radial damper according to one of claims 16 and 17, **characterized in that** internal friction means (5) are pads of an elastic material inserted under pressure between the inner shaft (3) and the internal bushing (4).

19. Radial damper according to one of claims 16, 17 and 18, **characterized in that** the inner shaft (3) comprises at least an external axial rib (3a) fitting into one of the axial gaps.

20. Household appliance, in particular washing machine or dryer (9), comprising a housing (10) which houses a washing tub (15) in which a washing drum (13) rotates being driven by a motor (21), the tub (15) being connected to the housing (10) by means of at least a supporting element (24) of a dampening system, the supporting element (24) being articulated to the housing (10) with intercalation of a swivelling lever (25) and at least one articulation (27, 29, 31) comprising a radial vibration damper, **characterized in that** at least one articulation (27) comprises the radial damper (1) which is defined in any of the preceding claims.

## Patentansprüche

1. Radialschwingungsdämpfer, der Folgendes umfasst: eine zylinderförmige Außenbuchse (2), die eine Innenwand (2a) umfasst, die sich mit einem ersten Element verbinden lässt und in der Lage ist, eine Innenwelle (3) aufzunehmen, die sich so mit einem zweiten Element verbinden lässt, dass die Innenwelle (3) und die zylinderförmige Außenbuchse (2) in der Lage sind, in Bezug zueinander eine Drehbewegung auszuführen, Reibmittel (5), die die Innenwelle (3) radial umschließen und eine Reibungskraft zum Dämpfen der Drehbewegung ausüben, und eine mit Drehmöglichkeit in der Außenbuchse (2) untergebrachte Innenbuchse (4), wobei die Innenbuchse (4) eine der Innenwand (2a) der Außenbuchse (2) gegenüberliegende Außenwand (4a) und einen axialen Innendurchgang (4b) umfasst, in dem die Innenwelle (3) angeordnet ist, **dadurch gekennzeichnet, dass** er Folgendes umfasst:
ein Drehbegrenzungssystem (2b, 4c, 7, 8) zwischen der Innenbuchse (4) und der Außenbuchse (2), das das Drehen zwischen der Außenbuchse (2) und der Innenbuchse (4) auf einem bestimmten freien Weg zulässt, so dass die Reibmittel (5) nicht einwirken, und ein Drehen zwischen der Außenbuchse (2) und der Innenbuchse (4) durch Betätigen der Reibmittel blockiert, und dass die Reibmittel (5) die Innenwelle (3) radial ergreifen und eine Reibkraft zum Dämpfen der Drehbewegung ausüben.

2. Radialschwingungsdämpfer nach Anspruch 1, **dadurch gekennzeichnet, dass**:
- die inneren Reibmittel (5) radial in dem axialen Innendurchgang (4b) angeordnet sind und zumindest auf die Innenbuchse (4) eine Reibungskraft ausüben,
- das Drehbegrenzungssystem (2b, 4c, 7, 8) zumindest einen axialen Kanal (7), der zwischen der Innenbuchse (4) und der Außenbuchse (2) liegt, und zumindest ein Drehbegrenzungselement (2b, 4c, 6) umfasst, das in dem axialen Kanal (7) liegt,
- der axiale Kanal (7) einen Querschnitt in der Form eines kreisförmigen Ringsegments aufweist, das von zwei radialen Endanschlagsflächen (8) begrenzt ist,
- jedes Drehbegrenzungselement (2b, 4c, 6) unter aus der Innenwand (2a) der Außenbuchse (2) hervortretenden Ansätzen (2b), aus der Außenwand (4a) der Innenbuchse (2) hervortretenden Vorsprüngen (4c) und Gleitstücken (6) ausgewählt ist und
- jedes vorstehende Element (2b, 4c) sich innerhalb des entsprechenden Kanals (7) auf eine solche Weise verlagern lässt, dass jedes vorstehende Element (2b, 4c), wenn sich die Außenbuchse (2) und die Innenbuchse (4) in Bezug zueinander drehen, einen freien Weg in dem axialen Kanal (7) hat, der durch die Anschlagflächen (8) begrenzt ist.

3. Radialdämpfer nach Anspruch 2, **dadurch gekennzeichnet, dass** mindestens ein Drehbegrenzungselement (2b, 4c, 6) so ausgelegt ist, dass es, wenn sich die Außenbuchse (2) und die Innenbuchse (4) in Bezug zueinander drehen, in dem Kanal (7) entgegen einer Reibungskraft verlagert wird, um das Drehen zwischen der Außenbuchse (2) und der Innenbuchse (4) zu dämpfen.

4. Radialdämpfer nach Anspruch 2 oder 3, **dadurch gekennzeichnet, dass**
- mindestens ein axialer Kanal (7) von einer inneren Vertiefung an der Innenwand (2a) der Außenbuchse (2) gebildet wird,
- es sich bei dem in der inneren Vertiefung platzierten Drehbegrenzungselement um einen äußeren Vorsprung (4c) handelt, der aus der Außenwand (4a) der Innenbuchse (4) hervortritt, und
- die Anschlagflächen (8) des axialen Kanals (7) von jeweiligen radialen Stufen gebildet werden, die den axialen Kanal (7) begrenzen, der von der inneren Vertiefung der Außenbuchse (2) gebildet wird.

5. Radialdämpfer nach Anspruch 2 oder 3, **dadurch gekennzeichnet, dass**
- mindestens ein axialer Kanal (7) von einer äußeren Vertiefung (4e) an der Außenwand (4a) der Innenbuchse (4) gebildet wird,
- es sich bei dem in der äußeren Vertiefung (4e) platzierten Drehbegrenzungselement um einen inneren Ansatz (2b) handelt, der aus der Innenwand (2a) der Außenbuchse (2) hervortritt, und
- die Anschlagflächen (8) des axialen Kanals (7) von jeweiligen radialen Stufen gebildet werden, die den axialen Kanal (7) begrenzen, der von der inneren Vertiefung (4e) der Innenbuchse (4) gebildet wird.

6. Radialdämpfer nach Anspruch 2 oder 3, **dadurch gekennzeichnet, dass**
- mindestens ein axialer Kanal (7) von einer inneren Vertiefung an der Innenwand (2a) der Außenbuchse (2) oder von einer äußeren Vertiefung (4e) an der Außenwand (4a) der Innenbuchse (4) gebildet wird und
- es sich bei mindestens einem der Drehbegrenzungselemente um ein Gleitstück (6) handelt, das in dem axialen Kanal (7) in auf dem freien Weg zwischen den Anschlagflächen (8) verlagerbarer Weise angeordnet ist.

7. Radialdämpfer nach Anspruch 6, **dadurch gekennzeichnet, dass**
- er mehrere Gleitstücke (6) umfasst, die jeweils in einem axialen Kanal (7) angeordnet sind,
- die Außenwand (4a) der Innenbuchse (4) mit mehreren äußeren Vorsprüngen (4c) versehen ist und
- die äußeren Vorsprünge (4c) entsprechende radial gegenüberliegende axiale Seiten umfassen, die jeweilige Anschlagflächen (8) bilden, welche die freien Wege der jeweiligen Gleitstücke (6) begrenzen.

8. Radialdämpfer nach Anspruch 6, **dadurch gekennzeichnet, dass**
- er mehrere Gleitstücke (6) umfasst, die jeweils in einem axialen Kanal (7) angeordnet sind,
- die Innenwand (2a) der Außenbuchse (2) mit mehreren inneren Ansätzen (2b) versehen ist und
- die inneren Ansätze (2b) entsprechende radial gegenüberliegende axiale Seiten umfassen, die jeweilige Anschlagflächen (8) bilden, welche die freien Wege der jeweiligen Gleitstücke (6) begrenzen.

9. Radialdämpfer nach Anspruch 6, **dadurch gekennzeichnet, dass**
- er mehrere Gleitstücke (6) umfasst, die jeweils in einem axialen Kanal (7) angeordnet sind,
- die Außenwand (4a) der Innenbuchse (4) zumindest mit einem äußeren Vorsprung (4c) versehen ist, der jeweilige radial gegenüberliegende axiale Seiten umfasst,
- die Innenwand (2a) der Außenbuchse (2) zumindest mit einem inneren Ansatz (2b) versehen ist, der jeweilige radial gegenüberliegende axiale Seiten umfasst,
- mindestens einer der axialen Kanäle (7) zwischen einem inneren Ansatz (2b) und einem äußeren Vorsprung (4c) begrenzt ist und
- die gegenüberliegenden axialen Seiten der Ansätze (2b, 4c) die jeweiligen Anschlagflächen (8) bilden, die den freien Weg des in dem axialen Kanal (8) platzierten Gleitstücks (6) begrenzen.

10. Radialdämpfer nach Anspruch 6, **dadurch gekennzeichnet, dass**
- die Außenwand (4a) der Innenbuchse (4) mit mehreren äußeren Vorsprüngen (4c) versehen ist,
- die äußeren Vorsprünge (4c) jeweilige radial gegenüberliegende axiale Seiten umfassen, die die jeweiligen Anschlagflächen (8) bilden, welche die freien Wege der jeweiligen Gleitstücke (6) begrenzen,
- die Innenwand (2a) der Außenbuchse (2) mit mehreren inneren Ansätzen (2b) versehen ist,
- die inneren Ansätze (2b) jeweilige radial gegenüberliegende axiale Seiten umfassen, die die jeweiligen Anschlagflächen (8) bilden, welche die freien Wege der jeweiligen Gleitstücke (6) begrenzen, und
- jeder axiale Kanal (7) zwischen einem inneren Ansatz (2b) und einem äußeren Vorsprung (4c) begrenzt ist.

11. Radialdämpfer nach einem der Ansprüche 2 bis 10, **dadurch gekennzeichnet, dass** mindestens eines der Gleitstücke (6) von einem Block aus einem elastischen Material gebildet wird, der unter Druck in einen der axialen Kanäle (7) eingeführt wird.

12. Radialdämpfer nach einem der vorhergehenden Ansprüche, **dadurch gekennzeichnet, dass** mindestens eines der Drehbegrenzungselemente (6) einen Querschnitt in der Form eines kreisförmigen Ringsegments aufweist.

13. Radialdämpfer nach einem der vorhergehenden Ansprüche, **dadurch gekennzeichnet, dass** der freie Weg jedes Drehbegrenzungselements (2b, 4c, 6) einem Bogen von 1 bis 4° entspricht.

14. Radialdämpfer nach einem der Ansprüche 2 bis 13, **dadurch gekennzeichnet, dass** die inneren Reibmittel (5) zumindest ein rohrförmiges Element umfassen, das zwischen der Innenwelle (3) und der Innenbuchse (4) angeordnet ist.

15. Radialdämpfer nach einem der vorhergehenden Ansprüche, **dadurch gekennzeichnet, dass** die inneren Reibmittel (5) zwischen der Innenwelle (3) und dem zweiten Element (4) angeordnet sind.

16. Radialdämpfer nach einem der Ansprüche 2 bis 13, **dadurch gekennzeichnet, dass** die inneren Reibmittel (5) mehrere innere Reibelemente (5) umfassen, die um entsprechende axiale Spalte voneinander beabstandet sind, und der Innendurchgang (4b) der Innenbuchse (4) zumindest einen inneren axialen Ansatz (4d) umfasst, der in einen der axialen Spalte passt.

17. Radialdämpfer nach Anspruch 16, **dadurch gekennzeichnet, dass** die inneren Reibmittel (5) einen Querschnitt in Form eines kreisförmigen Ringsegments aufweisen.

18. Radialdämpfer nach einem der Ansprüche 16 und 17, **dadurch gekennzeichnet, dass** es sich bei den inneren Reibmitteln (5) um Blöcke aus einem elastischen Material handelt, die unter Druck zwischen der Innenwelle (3) und der Innenbuchse (4) eingeführt werden.

19. Radialdämpfer nach einem der Ansprüche 16, 17 und 18, **dadurch gekennzeichnet, dass** die Innenwelle (3) zumindest eine axiale Außenrippe (3a) umfasst, die in einen der axialen Spalte passt.

20. Haushaltsgerät, insbesondere Waschmaschine oder Trockner (9), das ein Gehäuse (10) umfasst, in dem ein Waschlaugenbehälter (15) untergebracht ist, in dem sich eine von einem Motor (21) angetriebene Wäschetrommel (13) dreht, wobei der Laugenbehälter (15) zumindest über ein Halteelement (24) eines Dämpfungssystems mit dem Gehäuse (10) verbunden ist, wobei das Halteelement (24) unter Zwischenschaltung eines Schwenkhebels (25) und mindestens eines Gelenks (27, 29, 31) mit einem Radialschwingungsdämpfer an das Gehäuse (10) angelenkt ist, **dadurch gekennzeichnet, dass** mindestens ein Gelenk (27) den Radialdämpfer (1) nach einem der vorhergehenden Ansprüche umfasst.

## Revendications

1. Amortisseur radial de vibrations comprenant un manchon cylindrique extérieur (2) qui présente une paroi intérieure (2a), pouvant être reliée à un premier élément et pouvant loger un arbre intérieur (3) pouvant être relié à un second élément de telle façon que l'arbre intérieur (3) et le manchon cylindrique extérieur (2) peuvent tourner l'un par rapport à l'autre, des moyens de frottement (5) pour entourer l'arbre intérieur (3) radialement en exerçant une force de frottement pour amortir le mouvement de rotation, et un manchon intérieur (4) logé en étant rotatif dans le manchon intérieur (2), la broche intérieure (4) comprenant une paroi extérieure (4a) opposée à la paroi intérieure (2a) du manchon extérieur (2) et un passage axial intérieur (4b) dans lequel l'arbre intérieur (3) est agencé ; **caractérisé en ce qu'**il comprend :
un système délimitant la rotation (2b, 4c, 7, 8) entre le manchon intérieur (4) et le manchon extérieur (2) de telle sorte qu'il permet la rotation entre le manchon extérieur (2) et le manchon intérieur (4) dans un trajet libre prédéterminé, par conséquent le moyen de frottement (5) est inactif et bloque la rotation entre le manchon extérieur (2) et le manchon intérieur (4) en actionnant le moyen de frottement, et **en ce que** le moyen de frottement (5) saisit l'arbre intérieur (3) radialement, exerçant une force de frottement pour amortir le mouvement de rotation.

2. Amortisseur radial de vibrations selon la revendication 1, **caractérisé en ce que**
- le moyen de frottement intérieur (5) est agencé radialement dans le passage axial intérieur (4b) en exerçant une force de frottement au moins sur le manchon intérieur (4) ;
- le système délimitant la rotation (2b, 4c, 7, 8) comprend au moins un canal axial (7) situé entre le manchon intérieur (4) et le manchon extérieur (2), et au moins un élément délimitant la rotation (2b, 4c, 6) situé dans le canal axial (7) ;
- le canal axial (7) présente une section transversale ayant la forme d'un segment d'anneau circulaire délimité entre deux surfaces de butée finale radiales (8) ;
- chaque élément délimitant la rotation (2b, 4c, 6) étant sélectionné parmi des saillies (2b) sortant de la paroi intérieure (2a) du manchon extérieur (2), des saillies (4c) sortant de la paroi extérieure (4a) du manchon intérieur (2) et des blocs coulissants (6) ; et
- chaque élément en saillie (2b, 4c) pouvant être déplacé à l'intérieur du canal correspondant (7) de telle sorte que lorsque le manchon extérieur (2) et le manchon intérieur (4) tournent l'un par rapport à l'autre, chaque élément en saillie (2b, 4c) présente un trajet libre dans le canal axial (7) limité par les surfaces de butée (8).

3. Amortisseur radial selon la revendication 2, **caractérisé en ce qu'**au moins un élément délimitant la rotation (2b, 4c, 6) est conçu pour être déplacé dans le canal (7), opposant une force de frottement lorsque le manchon extérieur (2) et le manchon intérieur (4) tournent l'un par rapport à l'autre, de façon à amortir la rotation entre le manchon intérieur (4) et le manchon extérieur (2).

4. Amortisseur radial selon la revendication 2 ou 3, **caractérisé en ce qu'**au moins un canal axial (7) est formé par un creux intérieur sur la paroi intérieure (2a) du manchon extérieur (2) ;
- l'élément délimitant la rotation placé dans le creux intérieur est une saillie extérieure (4c) sortant de la paroi extérieure (4a) du manchon intérieur (4) ; et
- les surfaces de butée (8) du canal axial (7) sont formées par des étages radiaux respectifs qui délimitent le canal axial (7) formé par le creux intérieur du manchon extérieur (2).

5. Amortisseur radial selon la revendication 2 ou 3, **caractérisé en ce qu'**au moins un canal axial (7) est formé par un creux extérieur (4e) sur la paroi intérieure (4a) du manchon intérieur (4) ;
- l'élément délimitant la rotation placé dans le creux extérieur (4e) est une saillie intérieure (2b) sortant de la paroi intérieure (2a) du manchon extérieur (2) ; et
- les surfaces de butée (8) du canal axial (7) sont formées par des étages radiaux respectifs qui délimitent le canal axial (7) formé par le creux intérieur (4e) du manchon intérieur (4).

6. Amortisseur radial selon la revendication 2 ou 3, **caractérisé en ce qu'**au moins un canal axial (7) est formé par un creux intérieur sur la paroi intérieure (2a) du manchon extérieur (2) ou par un creux extérieur (4e) sur la paroi extérieure (4a) du manchon intérieur (4) ; et
- au moins un des éléments délimitant la rotation est un bloc coulissant (6) agencé dans le canal axial (7) de façon mobile le long du trajet libre entre les surfaces de butée (8).

7. Amortisseur radial selon la revendication 6, **caractérisé en ce qu'**il comprend une pluralité de blocs coulissants (6), chacun étant agencé dans un canal axial (7) ;
- la paroi extérieure (4a) du manchon intérieur (4) est dotée d'une pluralité de saillies extérieures (4c) ; et
- les saillies extérieures (4c) comprennent des côtés axiaux radialement opposés qui forment des surfaces de butée (8) respectives délimitant les trajets libres des blocs coulissants respectifs (6).

8. Amortisseur radial selon la revendication 6, **caractérisé en ce qu'**il comprend une pluralité de blocs coulissants (6), chacun étant agencé dans un canal axial (7) ;
- la paroi intérieure (2a) du manchon extérieur (2) est dotée d'une pluralité de saillies intérieures (2b) ; et
- les saillies intérieures (2b) comprennent des côtés axiaux radialement opposés qui forment des surfaces de butée (8) respectives délimitant les trajets libres des blocs coulissants respectifs (6).

9. Amortisseur radial selon la revendication 6, **caractérisé en ce qu'**il comprend une pluralité de blocs coulissants (6), chacun étant agencé dans un canal axial (7) ;
- la paroi extérieure (4a) du manchon intérieur (4) est dotée d'au moins une saillie extérieure (4c) comprenant des côtés axiaux radialement opposés respectifs ;
- la paroi intérieure (2a) du manchon extérieur (2) est dotée d'au moins une saillie intérieure (2b) comprenant des côtés axiaux radialement opposés respectifs ;
- au moins un des canaux axiaux (7) est délimité entre une saillie intérieure (2b) et une saillie extérieure (4c) ; et
- les côtés axiaux opposés des saillies (2b, 4c) forment les surfaces de butée (8) respectives délimitant le trajet libre du bloc coulissant (6) placé dans le canal axial (8).

10. Amortisseur radial selon la revendication 6, **caractérisé en ce que**
- la paroi extérieure (4a) du manchon intérieur (4) est dotée d'une pluralité de saillies extérieures (4c) ;
- les saillies extérieures (4c) comprennent des côtés axiaux radialement opposés respectifs qui forment les surfaces de butée (8) respectives délimitant les trajets libres des blocs coulissants respectifs (6) ;
- la paroi intérieure (2a) du manchon extérieur (2) est dotée d'une pluralité de saillies intérieures (2b) ;
- les saillies intérieures (2b) comprennent des côtés axiaux radialement opposés respectifs qui forment les surfaces de butée (8) respectives délimitant les trajets libres des blocs coulissants respectifs (6) ; et
- chaque canal axial (7) est délimité entre une saillie intérieure (2b) et une saillie extérieure (4c).

11. Amortisseur radial selon l'une quelconque des revendications 2 à 10, dans lequel au moins un des blocs coulissants (6) est composé d'un tampon en matériau élastique inséré par pression dans l'un des canaux axiaux (7).

12. Amortisseur radial selon l'une quelconque des revendications précédentes, **caractérisé en ce qu'**au moins un des éléments délimitant la rotation (6) présente une section transversale ayant la forme d'un segment d'anneau circulaire.

13. Amortisseur radial selon l'une quelconque des revendications précédentes, **caractérisé en ce que** le trajet libre de chaque élément délimitant la rotation (2b, 4c, 6) correspond à un arc de 1 à 4°.

14. Amortisseur radial selon l'une quelconque des revendications 2 à 13, **caractérisé en ce que** le moyen de frottement intérieur (5) comprend au moins un élément tubulaire intercalé entre l'arbre intérieur (3) et le manchon intérieur (4).

15. Amortisseur radial selon l'une quelconque des revendications précédentes, **caractérisé en ce que** le moyen de frottement intérieur (5) est agencé en étant intercalé entre l'arbre intérieur (3) et le second élément (4).

16. Amortisseur radial selon l'une quelconque des revendications 2 à 13, **caractérisé en ce que** le moyen de frottement intérieur (5) comprend une pluralité de moyens de frottement intérieurs (5) espacés l'un de l'autre par des écarts axiaux respectifs ; et le passage intérieur (4b) du manchon intérieur (4) comprend au moins une saillie intérieure axiale (4d) s'insérant dans un des écarts axiaux.

17. Amortisseur radial selon la revendication 16, **caractérisé en ce que** les moyens de frottement intérieurs (5) présentent une section transversale ayant la forme d'un segment d'anneau circulaire.

18. Amortisseur radial selon l'une des revendications 16 et 17, **caractérisé en ce que** les moyens de frottement intérieurs (5) sont des tampons en matériau élastique insérés par pression entre l'arbre intérieur (3) et le manchon intérieur (4).

19. Amortisseur radial selon l'une quelconque des revendications 16, 17 et 18, **caractérisé en ce que** l'arbre intérieur (3) comprend au moins une nervure axiale extérieure (3a) s'insérant dans un des écarts axiaux.

20. Appareil ménager, en particulier lave-linge ou sèche-linge (9), comprenant un carter (10) qui abrite une cuve de lavage (15) dans laquelle un tambour de lavage (13) tourne en étant entraîné par un moteur (21), la cuve (15) étant reliée au carter (10) au moyen d'au moins un élément de support (24) d'un système d'amortissement, l'élément de support (24) étant articulé sur le carter (10) par un levier articulé (25) intercalé et au moins une articulation (27, 29, 31) comprenant un amortisseur radial de vibrations, **caractérisé en ce qu'**au moins une articulation (27) comprend l'amortisseur radial (1) qui est défini dans l'une quelconque des revendications précédentes.
